## Europäisches Patentamt

## European Patent Office

## Office européen des brevets

(11) Veröffentlichungsnummer: **0 372 089**

**A1**

(12) **EUROPÄISCHE PATENTANMELDUNG**
veröffentlicht nach Art. 158 Abs. 3
EPÜ

(21) Anmeldenummer: **89906485.1**

(22) Anmeldetag: **14.04.89**

(86) Internationale Anmeldenummer:
**PCT/SU89/00094**

(87) Internationale Veröffentlichungsnummer:
**WO 89/10688 (16.11.89 89/27)**

(51) Int. Cl.⁵: **A01J 7/00**

---

(30) Priorität: **05.05.88 SU 4413030**

(43) Veröffentlichungstag der Anmeldung:
**13.06.90 Patentblatt 90/24**

(84) Benannte Vertragsstaaten:
**DE FR GB IT NL SE**

(71) Anmelder: **LATVIISKAYA SELSKOKHOZYAISTVENNAYA AKADEMIA**
**ul. Lenina, 2 Elgava**
**Latviiskaya SSR, 229600(SU)**

(72) Erfinder: **MOSKVIN, Gennady Alexeevich**
**ul. Satixmes, 49-59 Elgava**
**Latviiskaya SSR, 229601(SU)**

(74) Vertreter: **Görg, Klaus, Dipl.-Ing. et al**
**Hoffmann, Eitle & Partner Arabellastrasse 4**
**(Sternhaus)**
**D-8000 München 81(DE)**

---

(54) **VORRICHTUNG UND VERFAHREN ZUR BESTIMMUNG DER MILCHMENGE VON EINER GEMOLKENEN KUH.**

(57) Verfahren zur Bestimmung der durch eine Melknalage von einer Kuh gemolkenen Milchmenge besteht darin, dass man einen kontinuierlichen Fluss der Milch (28) von einer Kuh erzeugt und aus diesem Fluss Einzeldosen der Milch (28) bildet. Die Bildung der Einzeldosen der Milch (28) in der Einrichtung für die Durchführung dieses Verfahrens verwirklicht man durch Erzeugung der der vorgegebenen Durchflussmenge der Milch (28) entsprechenden Einzeldosen der Milch (28) mit Hilfe eines in einer Empfangskammer (22) eines Milchzählers (I) untergebrachten Milchdurchflussgebers (24), wodurch eine Korrektur in die Bildung der Einzeldosen der Milch (28) mittels eines Gebers (I5) zur Auswahl von einzelnen Milchdosen eingebracht wird, die einen dynamischen Messfehler charakterisiert. Dann werden aus den Einzeldosen der Milch (28) unter Berücksichtigung der Eigenschaften der Milch (28) und der Höchstempfindlichkeit des Zählers (I) mittels eines in einer Austrittskammer (23) des Zählers (I) angeordneten Gebers (33) von optimalen Milchdosen optimale Dosen der Milch (28) bestimmt, wodurch eine Korrektur in die Bestimmung der oppimalen Dosen der Milch (28) mit Hilfe eines Gebers (I6) zur Summierung von optimalen Milchdosen eingebracht wird, die einen statischen Messfehler charakterisiert, worauf die optimalen Dosen der Milch (28) mittels einer Recheneinheit (I9) summiert werden.

FIG.4

# VERFAHREN UND EINRICHTUNG ZUR BESTIMMUNG DER DURCH EINE MELKANLAGE VON EINER KUH GEMOLKENEN MILCHMENGE

## Gebiet der Technik

Die vorliegende Erfindung bezieht sich auf Verfahren und Einrichtungen zur Bestimmung der Milchmenge und betrifft insbesondere Verfahren und Einrichtungen zur Bestimmung der durch eine Melkanlage von einer Kuh gemolkenen Milchmenge.

## Bisheriger Stand der Technik

Zur Durchführung einer planmässigen zootechnischen, Veterinär- und Selektionsarbeit mit einer Milchviehherde, zur Organisierung einer kommerziellen Tätigkeit mit dem Produktionsverbraucher, zur Zusammenstellung von wissenschaftlich begründeten Futterrationen für Kühe entsprechend dem physiologischen Zustand jeder Kuh und ihrem Leistungsniveau ist es notwendig, über genaue, zuverlässige und objektive Informationen über die Milcherträge jeder Kuh zu verfügen.

Darüber hinaus erfordert die Eingabe von Informationen über die individuellen Milcherträge in ein Steuerrechnersystem für eine Milchfarm ein tägliches Bereitstellen derartiger Informationen im Vorgang jeder Melkung. Hierbei muss die Art des Ausgangssignals eines Milchzählers mit dem Rechner kompatibel, einfach in der Realisierung und zuverlässig in der Übertragung über entsprechende Nachrichtenkanäle sein.

Ausser dem Problem der Automatisierung des arbeitsintensiven Vorganges besteht das Hauptproblem auch in der Beachtung von Eigenschaften des zu messenden physikalischen Mediums - der Milch, weil deren Eigenschaften einzigartig und die bekannten industriellen Verfahren zur Bestimmung der Flüssigkeitsmenge, um die Milchmenge von einer Kuh zu bestimmen, sowie die Einrichtungen für deren Durchführung unannehmbar sind.

Ausserdem unterscheiden sich voneinander wesentlich auch die mathematischen und physikalischen Modelle der Verfahren und Einrichtungen zur Bestimmung der durch Melkanlagen von jeder Kuh gemolkenen Milch, was zusätzliche Messfehler einbringt. Die Genauigkeit der bestehenden Einrichtungen zur Bestimmung der Milchmenge von einer Kuh wird auch wesentlich durch konkrete Betriebsbedingungen für die Milchzähler und durch deren konkrete konstruktive Besonderheiten beeinflusst. Die Weiterentwicklung der Konstruktion des Milchzählers im Lichte der traditionellen Vorstellungen ergibt keine positiven Resultate, was dafür spricht, dass die bekannten Einrichtungen vom Standpunkt der Erhöhung der Genauigkeit der Bestimmung der von einer Kuh gemolkenen Milchmenge die Grenze ihrer Möglichkeiten erreicht haben.

Der tatsächliche Unterschied in den Betriebsbedingungen für die gleichen Typen der Zähler ergibt verschiedene Resultate hinsichtlich der Genauigkeit, deren Gegenüberstellung und Einschätzung zur Zeit nicht möglich erscheinen, weil die bekannten Verfahren zur Bestimmung der Milchmenge speziell von einer Kuh und die Einrichtungen für deren Durchführung den metrologischen Forderungen in Bezug auf die Einheitlichkeit der Vorgänge der Einstellung der Zähler, ihre Prüfungen und ihren Betrieb nicht genügen was auch zusätzliche Messfehler in die Bestimmung der individuellen Milchmenge von jeder Kuh einbringt.

Ausserdem führen die Kontinuierlichkeit des Vorganges der Milkung in einem pulsierenden Milchfluss der Melkanlage sowie eine sich stark ändernde Intensität der Milchhergabe ($Q = f(t)$) bei den Kühen mit einer jeder Kuh individuell eigenen Dynamik zur Bildung von dynamischen Komponenten des Messfehlers der Milchzähler.

Die Kurve $Q = f(t)$ der Milchabgabeintensität einer Kuh im Vorgang ihrer Melkung stellt eine Kurve dar, die einen nichtlinearen Verlauf der Änderung der Milchdurchflussmenge beim Melken und bei der Durchführung des Verfahrens zur Bestimmung der durch eine Melkanlage von einer Kuh gemolkenen Milchmenge charakterisiert.

Die Änderungen der Durchflussmenge der Milch werden also im Vorgang der Milkung ($Q = f(t)$) bei der Bestimmung der Milchmenge durch die bekannten Einrichtungen nicht berücksichtigt. Dies setzt die Messgenauigkeit herab.

Das andere wichtige, die Melkung begleitende Problem sind eine Sicherung der Stabilisierung des Vakuumniveaus unter den Zitzen der Kuh im Vorgang der Melkung und die Bestimmung der Milchmenge von einer Kuh durch die Melkanlage, denn die bestehenden Verfahren und Einrichtungen zur Bestimmung der durch eine Melkanlage von einer Kuh gemolkenen Milchmenge wirken auf das Vakuumregime der Melkung der Kühe stark ein, was zu einer Erkrankung des Euters und der Zitzen bei ihnen führt, was vom Standpunkt der Forderungen der Physiologie des Maschinenmelkens unzulässig ist und eine Verringerung der Leistung der Kühe und der Menge der von ihnen gemolkenen Milch zur Folge hat.

Es sind Verfahren zur Bestimmung der durch eine Melkanlage von einer Kuh gemolkenen Milchmenge bekannt, die die Erzeugung eines kontinuierlichen Milchflusses von einer Kuh, die Bildung von einzelnen Milchdosen aus diesem Fluss unter anschliessender Summierung dieser einzelnen Milchdosen zu einem Gesamtbetrag beinhalten, wobei die einzelnen Milchdosen in Form diskreter Volumen- oder Massengrössen (SU, A, 886855 bzw. I020090) gebildet werden können.

Die Genauigkeit der Bestimmung der durch die Melkanlage von einer Kuh gemolkenen Milchmenge hängt gemäss diesen Verfahren wesentlich von der bei der Erzeugung des kontinuierlichen Milchflusses von einer Kuh gebildeten Durchflussmenge ver Milch ab.

Die nichtlineare Abhängigkeit der Änderung der Grösse der Einzeldosen von der Durchflussmenge der Milch gilt bei den genannten Verfahren auch für die Bildung der einzelnen Volumen- oder Massendosen. Bei der Bestimmung der Milchmenge von einer Kuh wird sie in den bekannten Verfahren nicht berücksichtigt.

Der dynamische Messfehler bei der Bestimmung der Milchmenge gemäss den bekannten Verfahren wird also auch nicht berücksichtigt.

Ausserdem sind diese Verfahren für die Berücksichtigung der konkreten Eingenschaften des zu messenden Mediums - - der Milch - nicht vorgesehen und gewährleisten keine Einheit des mathematischen und physikalischen Modells des Messvorganges, was die Bewertung der Leistung der Kühe ungenau und unsicher, kompliziert und arbeitsaufwendig macht.

Es sind Einrichtungen zur Bestimmung der durch eine Melkanlage von einer Kuh gemolkenen Milchmenge bekannt, die die obengenannten Verfahren durchführen und einen diskreten Milchzähler vom Massen- oder Volumentyp beinhalten, der mittels eines Eintritts- und eines Austritts-stutzens mit dem Melkapparat der Melkanlage und mit deren Milchleitung kommuniziert und in dessen Innerem ein dosierendes Fühlelement untergebracht ist, das entweder in Form einer Drehtrommel (SU, A, 686855) oder einer Rinne (SU, A, I020090) mit einer Mess- und einer Korrekturkammer und einem daran befestigten Magneten ausgeführt ist, der mit einem Geber zur Summierung von einzelnen Milchdosen zusammenwirkt, der diskrete Volumen- bzw. Massengrössen der einzelnen Milchdosen bildet.

Die vorliegenden Einrichtungen weisen eine niedrige Messgenauigkeit im Zusammenhang mit dem Einfluss der Durchflussmenge der Milch auf den Messfehler auf. Das Vorhandensein der Korrekturkammer in diesen Einrichtungen ermöglicht eine Korrektur der Anzeigen bei der Einstellung auf eine Durchflussmenge der den Zähler passierenden Milch, während die Milchabgabeintensität bei jeder Kuh eine Variable ist. Der reale dynamische Verlauf des Vorganges der Milchabgabe wird durch die vorliegenden Einrichtungen nicht erfasst, es fehlen entsprechende Konstruktionsele-mente, was die Genauigkeit der Bestimmung der durch die Melkanlage von einer Kuh gemolkenen Milchmenge herabsetzt.

Weiterhin fehlen in diesen Einrichtungen Mittel zur Verarbeitung von Informationen über die Ergebnisse der Messung der Einzeldosen, und die Einrichtungen sehen weder eine statische noch eine dynamische Korrektur des Messfehlers vor, was die Abgabe der Einzeldosen durch den Milchzähler unkontrollierbar und nichtoptimal macht.

Einen wesentlichen Einfluss übt die Konstruktion dieser Milchzähler auf das Vakuumregime des Maschinenmelkens aus, was sich auf den Gesundheitszustand der Kühe negativ auswirkt.

Es sind auch Verfahren zur Bestimmung der Milchmenge von einer Kuh bekannt, die bei der Melkung jeder Kuh auf einer Melkanlage (Landtechnik, BRD, H. 4, I982, D.Ordolff "Technische Lösungen zur Milchmengenmessung", S. I88 bis I90) realisiert werden.

In den genannten Verfahren wird die Bildung der einzelnen Milchdosen auch durch die Intensität des Milchflusses wesentlich beeinflusst, was die Messgenauigkeit herabmindert.

Diese Verfahren üben eine negative Wirkung auf die Gesundheit der Kühe im Vorgang der Melkung aus, weil die die genannten Verfahren realisierenden Milchzähler das Vakuumregime der Arbeit der Melkanlage erheblich beeinflussen, was zu den Erkrankungen der Kühe, nämlich ihres Euters, führt, was die Milcherträge von jeder Kuh verringert.

Darüber hinaus werden in diesen Verfahren keine optimalen Milchdosen entsprechend dem physikalischen Modell des Messvorganges gebildet, was die Anwendung dieser Verfahren begrenzt, weil die Genauigkeit der Bestimmung der Menge der von jeder Kuh gemolkenen Milch nicht gross ist.

Es sind auch Einrichtungen zur Bestimmung der Milchmenge von einer Kuh bekannt, die die obengenannten Verfahren realisieren und eine andere Konstruktionsausführung eines Fühlelements aufweisen, das einzelne Milchdosen beim Maschinenmelken der Kühe (Landtechnik, BRD, H. 4, 1982,D.Ordolf "Technische Lösungen zur Milchmengenmessung", S. I88 bis I90) bildet.

Die durch die genannten Einrichtungen ausgegebenen Milchdosen sind aber beim Melken der Kühe nicht optimal, denn ihre Konstruktion berücksichtigt die Besonderheiten des Betriebes und die Eigenschaften des zu messenden Mediums nicht.

Ausserdem sehen die erwähnten Einrichtungen keine Korrektur der Anzeigen weder in deren statischem noch dynamischem Betrieb vor. Durch diese Einrichtungen sind konstruktiv keine Massnahmen vorgesehen, um den Einfluss ihrer Konstruktion auf das Vakuumregime der Melkung der Kühe sowie der Durchflussmenge der Milch auf die Messgenauigkeit zu eliminieren.

Es ist auch ein Verfahren zur Bestimmung der durch eine Melkanlage von einer Kuh gemolkenen Milchmenge bekannt, das in der Bildung einzelner Milchdosen aus einem kontinuierlichen Milchfluss von einer Kuh unter anschliessender Summierung dieser Einzeldosen (DE, A, 32I4734)

besteht.

Das genannte Verfahren sieht auch keine Möglichkeit der Berücksichtigung der Milcheigenschaften, der konstruktiven Besonderheiten des Milchzählers, weder eine statische noch eine dynamische Korrektir des Messfehlers des Milchzählers vor, weshalb es in diesem Verfahren nicht möglich ist, optimale Milchdosen im Vorgang der Trennung des Flusses in einzelne diesen zusammensetzende Dosen zu bilden. Das Fehlen der Möglichkeit, den Messvorgang bei der Realisierung dieses Verfahrens zu programmieren, gestattet es nicht, eine Korrektur von Messergebnissen mit Rücksicht auf die konkreten Betriebsbedingungen des Zählers und die Milcheigenschaften vorzunehmen, d.h. es fehlt die Möglichkeit, eine automatisierte Rückkopplung für die Steuerung des Vorganges der Messung der optimalen Milchdosen zu realisieren. All das setzt die Messgenauigkeit bei der Messung der Milchmenge herab.

Es ist auch eine Einrichtung zur Bestimmung der durch eine Melkanlage von einer Kuh gemolkenen Milchmenge bekannt, die das obengenannte Verfahren durchführt und einen diskreten Milchzähler mit einem Schwimmer-Fühlelement und einem Magneten darauf umfasst, der mit einem Geber zur Summierung von einzelnen Milchdosen, der in Form einer summierenden Recheneinheit (DE, A, 3214734) ausgeführt ist, zusammenwirkt.

Die genannte Einrichtung sieht auch konstruktiv keine Berücksichtigung der Besonderheiten ihrer Konstruktion, ihres Betriebes und der Milcheigenschaften im Vorgang der Melkung und Bestimmung der durch die Melkanlage von einer Kuh gemolkenen Milchmenge vor, berücksichtigt den Einfluss der Durchflussmenge der Milch auf die Messgenauigkeit nicht sowie sieht keine Mittel zur statischen und dynamischen Korrektur des Messfehlers der Einrichtung unter deren realen Betriebsverhältnissen vor, was deren Funktionsfähigkeiten und die Genauigkeit der Bestimmung der von einer Kuh gemolkenen Milchmenge infolge der Nichtoptimalität der ausgegebenen Milchdosen begrenzt.

Im Ergebnis fällt im ganzen die Effektivität der Milchproduktion, der zootechnischen, Veterinär- und Selektionsarbeit mit der Herde ab.

Es ist auch ein Verfahren zur automatischen Messung der durch die Melkanlage von einer Kuh gemolkenen Milchmenge bekannt, das ein "intelligentes" Prinzip der Messung der einzelnen Milchsosen in Abhängigkeit vom Grad der Füllung eines Messbehälters mit der Milch im Vorgang der Melkung einer einzelnen Kuh realisiert und den Einsatz einer Recheneinrichtung zur Berücksichtigung der Besonderheiten der Milcheigenschaften und zur laufenden automatischen Registrierung der gemolkenen Milchmenge (SU, A, II09092) vorsieht.

Dieses Verfahren beeinflusst die Gesundheit der Kühe nicht, realisiert aber ein statisches Prinzip der Berücksichtigung von bei der Messung auftretenden Fehlern und weist keine hohe Messgenauigkeit auf.

Darüber hinaus ist das genannte Verfahren in der Anwendung kraft der Spezifik seiner Einsatzbedingungen gemäss der akzeptierten Melktechnik- unter Benutzung von Messbehältern - beschränkt, weshalb die Rechenmöglichkeiten der Recheneinrichtung hierbei nicht voll und nicht effektiv genug benutzt werden.

Es ist auch eine Einrichtung zur Bestimmung der von einer Kuh gemolkenen Milchmenge bekannt, die das obengenannte Verfahren durchführt und einen Messbehälter, ein Schwimmer-Fühlelement mit einem daran angeordneten Magneten, der in dem Masse der Füllung des Behälters mit der Milch von einer Kuh mit einem Geber zur Summierung von Einzeldosen, der in Form einer Recheneinheit (SU, A, II09092) ausgeführt ist, in Wechselwirkung tritt, enthält.

Diese Einrichtung ist in der Lage, die Besonderheiten des Betriebes, der Konstruktion und die Milcheigenschaften in Betracht zu ziehen, und beeinträchtigt den Gesundheitszustand der Kühe nicht, realisiert aber konstruktiv lediglich eine statische Korrektur des Messfehlers bei der Bestimmung der von einer Kuh gemolkenen Milchmenge, was die Messgenauigkeit vermindert.

Darüber hinaus ist die erwähnte Einrichtung in der Anwendung im Zusammenhang mit der Spezifik der akzeptierten Melktechnik unter Benutzung von Messbehältern begrenzt, weshalb die Funktional- und Rechenmöglichkeiten der Rechen-

einheit hierbei nicht voll und nicht effektiv genug ausgenutzt werden.

Schliesslich ist ein Verfahren zur Bestimmung der durch eine Melkanlage von einer Kuh gemolkenen Milchmenge bekannt, das darin besteht, dass man einen kontinuierlichen Milchfluss von einer Kuh erzeugt, aus diesem Milchfluss einzelne Milchdosen bildet, dann aus diesen einzelnen Milchdosen optimale Milchdosen unter Beachtung der Milcheigenschaften und der Höchstempfindlichkeit eines Milchzählers der Melkanlage bestimmt, wodurch eine Korrektur in die Bestimmung der optimalen Milchdosen eingebracht wird, die einen statischen Messfehler bei der Bildung der einzelnen Milchdosen charakterisiert, und im weiteren die optimalen Milchdosen summiert, wodurch die von einer Kuh gemolkene Milchmenge (SU, A, II75403) bestimmt wird.

Im genannten Verfahren wird ein statisches Prinzip der Korrektion des Messfehlers bei der Messung der von einer Kuh gemolkenen Milchmenge unter Verwendung der Methodik einer Digitalmodellierung eines optimalen Volumens einer Messkammer des Milchzählers realisiert, der es gestattet, durch Trennung des Flusses in die Einzeldosen optimale Dosen auszugeben, die unter Berücksichtigung der Milcheigenschaften, Konstruktionsbesonderheiten des Milchzählers und der Ergebnisse der Digitalmodellierung der optimalen Milchdosen von einer Kuh statisch korrigiert sind.

Die Ungleichmässigkeit des realen Milchflusses (der Milchabgabe) führt aber im Vorgang der Melkung der Kühe zu einer Änderung der Intensität des Milchflusses, einer Änderung der Durchflussmenge der den Milchzähler passierenden Milch, die ausgehend von den Bedingungen der Konstanthaltung der Menge der diesen passierenden Milch statisch korrigiert ist.

Infolgedessenn berücksichtigt das genannte Verfahren die reale Änderung der Durchflussmenge der Milch bei der Messung der Milchmenge unter den Bedingungen einer ungleichmässigen Milchabgabe bei einer Kuh nicht und wiederspiegelt diese Änderungen bei der Bildung der Einzeldosen nicht, was die Genauigkeit der Bestimmung der optimalen Milchdosen und also die Messgenauigkeit bei der Messung der durch die Melkanlage von einer Kuh gemolkenen Milchmenge herabsetzt.

Schliesslich ist eine Einrichtung zur Bestimmung der durch eine Melkanlage von einer Kuh gemolkenen Milchmenge für die Durchführung des obengenannten Verfahrens bekannt, die einen diskreten Milchzähler enthält, der mittels eines Eintritts- und eines Austrittsstutzens mit einem Melkapparat der Melkanlage bzw. mit deren Milchleitung kommuniziert und in dessen Gehäuse ein Geber von optimalen Milchdosen untergebracht ist, an dessen Fühlelement ein Magnet befestigt ist, der in dem Augenblick der Bestimmung der optimalen Milchdosis mit einem Geber zur Summierung von optimalen Milchdosen zusammenwirkt, der in unmittelbarer Nähe des Magneten des Fühlelements des ersteren Gebers von der Aussenseite des Milchzählers angeordnet und an einen entsprechenden Eingang einer Recheneinheit (SU, A, II75403) angeschlossen ist.

In der genannten Einrichtung weist der Milchzähler nur einen Geber von optimalen Milchdosen auf, die mit Rücksicht auf die Milcheigenschaften und die Besonderheiten der Konstruktion der Einrichtung und ihres Betriebes unter Vernachlässigung der Dynamik des Milchflusses statisch korrigiert sind.

Die genannte Einrichtung ist nur für unabhängige spezifische Systeme zur getrennten Melkung und dem Milchtransport über die Rohrleitungen bestimmt und für die Anwendung in herkömmlichen Melkanlagen nicht geeignet, wo die einzelnen Kühe unmittelbar in die Milchleitung gemolken werden.

Im Ergebnis arbeitet die genannte Einrichtung effektiv nur unter den Bedingungen einer gleichbleibenden Durchflussmenge der den Zähler passierenden Milch.

Darüber hinaus ist die genannte Einrichtung zur Sicherung einer schonenden Melkung jeder einzelnen Kuh bei einer unmittelbaren Melkung in die Milchleitung der Melkanlage konstruktiv nicht geeignet.

Im Endeffekt weist die erwähnte Einrichtung eine unzureichende Genauigkeit der Bestimmung der Milchmenge von einer Kuh auf und wirkt sich negativ auf den Gesundheitszustand der Kühe aus, weshalb die Effektivität der zootechnischen, Selektions- und Veterinärarbeit mit der Herde abfällt.

Offenbarung der Erfindung

Der Erfindung liegt die Aufgabe zugrunde, ein derartiges Verfahren zur Bestimmung der durch eine Melkanlage von einer Kuh gemolkenen Milchmenge zu entwickeln, das den Einfluss einer Änderung der Milchflussintensität auf den Vorgang der Bildung von optimalen Milchdosen, die im Vorgang der Trennung eines kontinuierlichen Milchflusses variabler Intensität in Einzeldosen ausgegeben werden, berücksichge und ein günstiges Vakuumregime der Arbeit des Melkapparates der Melkanlage schafft, was es gestattet, die Messgenauigkeit bei der Messung der von einer Kuh gemolkenen Milchmenge zu erhöhen und ein physiologisch optimales schonendes Maschinenmelken der Kühe, ohne ihre Gesundheit zu beeinträchtigen, zu erhalten, sowie eine derartige Einrichtung zur Bestimmung der durch eine Melkanlage von einer Kuh gemolkenen Milchmenge für die Durchführung des obengenannten Verfahrens zu schaffen, in der die Durchführung einer dynamischen Korrektur eines Messfehlers ermöglicht wird, der infolge der Änderung der Milchflussintensität im Vorgang der Melkung der Kühe entsteht, wodurch es möglich wird, die Genauigkeit der Bestimmung der durch die Melkanlage von einer Kuh gemolkenen Milchmenge zu erhöhen, und in der durch Stabilisierung des Vakuumniveaus unmittelbar unter den Euterzitzen der Kühe keine schädliche Wirkung auf ihre Gesundheit im Vorgang der Melkung ausgeübt wird und die gemolkene Milchmenge sowie die Gesamtleistung der Herde nicht absinken.

Dies wird dadurch erreicht, dass in dem Verfahren zur Bestimmung der durch eine Melkanlage von einer Kuh gemolkenen Milchmenge, darin bestehend, dass man einen kontinuierlichen Milchfluss von einer Kuh erzeugt, aus diesem Fluss einzelne Milchdosen bildet, denn aus diesen einzelnen Milchdosen optimale Milchdosen unter Beachtung der Milcheigenschaften und der Höchstempfindlichkeit eines Milchzählers der Melkanlage bestimmt, wodurch eine Korrektur in die Bestimmung der optimalen Milchdosen eingebracht wird, die einen statischen Fehler bei der Bildung der einzelnen Milchdosen charakterisiert, und im weiteren die optimalen Milchdosen summiert, gemäss der Erfindung die einzelnen Milchdosen aus dem kontinuierlichen Milchfluss durch Erzeugung der der vorgegebenen Durchflussmenge der Milch entsprechenden einzelnen Milchdosen aus diesem Milchfluss gebildet werden, wodurch eine Korrektur in die Bildung der einzelnen Milchdosen eingebracht wird, die einen dynamischen Messfehler bei der Bildung der einzelnen Milchdosen charakterisiert.

Hierbei kann die vorgegebene Durchflussmenge der Milch kontinuierlich durch Erzeugung einer kontinuierlichen resultierenden Durchflussmenge der Milch gebildet werden, die zu jedem laufenden Durchflussmenge der Milch gebildet werden, die zu jedem laufenden Zeitpunkt durch eine Differenz zwischen den Durchflussmengen der Milch am Anfang und Ende bestimmt wird.

Dies wird auch dadurch erreicht, dass in der Einrichtung zur Bestimmung der durch eine Melkanlage von einer Kuh gemolkenen Milchmenge für die Durchführung des obengenannten Verfahrens, die einen diskreten Milchzähler enthält, der mittels eines Eintritts- und eines Austrittsstutzens mit einem Melkapparat der Melkanlage bzw. mit deren Milchleitung kommuniziert und in dessen Gehäuse ein Geber von optimalen Milchdosen untergebracht ist, an dessen Fühlelement ein Magnet befestigt ist, der in dem Augenblick der Bestimmung der optimalen Milchdosis mit einem Geber zur Summierung von optimalen Milchdosen zusammenwirkt, der in unmittelbarer Nähe des Magneten des Fühlelements des ersteren Gebers von der Aussenseite des Gehäuses des Milchzählers angeordnet und an einen entsprechenden Eingang einer Recheneinheit angeschlossen ist, gemäss der Erfindung innerhalb des Gehäuses des diskreten Milchzählers eine Trennwand mit einer einen vorgegebenen Querschnitt aufweisenden Öffnung zum Milchaustritt, die den Gehäuseraum des Milchzählers in eine seitens des Eintrittsstutzens liegende Empfangskammer und eine seitens des Austrittsstutzens liegende Austrittskammer trennt, in der der Geber von optimalen Milchdosen angeordnet ist, und ein innerhalb der Empfangskammer in unmittelbarer Nähe einer der Gehäusewände des Milchzählers angeordneter Milchdurchflussgeber, der über seinen Eingang mit dem Eintrittsstutzen des Milchzählers und über seine einen vorgegebenen Querschnitt aufweisende Austrittsöffnung mit der Öffnung in der Trennwand kommuniziert und als Fühlelement einen Schwimmer mit einem Magneten aufweist, der am Schwimmer seitens der Gehäusewand des Milchzählers befestigt ist, in deren unmittelbarer Nähe der Milchdurchflussgeber liegt, wobei der Querschnitt der Austrittsöffnung des Milchdurchflussgebers kleiner als der Querschnitt der Öffnung in der Trennwand ist, sowie ein Geber zur Auswahl von der vorgegebenen Durchflussmenge der Milch entsprechenden einzelnen Milchdosen, der in unmittelbarer Nähe des Magneten des Fühlelements des Milchdurchflussgebers von der Aussenseite des Gehäuses des Milchzählers angeordnet ist, mit dem Magneten des Fühlelements des ersteren Gebers in dem Augenblick der Bestimmung der einzelnen Milchdosis in Wechselwirkung tritt und an einen entsprechenden Eingang der Recheneinheit gelegt ist, vorgesehen sind.

Es ist zweckmässig, dass in der Einrichtung ein Element zur Lenkung des Milchflusses die Wände des Milchdurchflussgebers entlang verfügbar ist, das am Eingang des Milchdurchflussgebers angeordnet ist.

Es ist erwünscht, dass der Geber zur Auswahl von der vorgegebenen Durchflussmenge der Milch entsprechenden einzelnen Milchdosen in Form einer Gruppe von zueinander parallelgeschalteten Zungenrelais, die in einem vorgegebenen Abstand voneinander angeordnet sind, der der Grösse der Änderung der Intensität des Milchflusses im Milchdurchflussgeber entspricht, ausgeführt ist.

Derartige Ausführung der zu patentierenden Einrichtung zur Bestimmung der Milchmenge für die Durchführung des erfindungsgemässen Verfahrens sichert eine hohe Genauigkeit der Bestimmung der durch die Melkanlage von einer Kuh gemolkenen Milchmenge unabhängig von der Änderung der Intensität ihrer Milchabgabe im Vorgang der Melkung, trägt zur Erhaltung der Gesundheit der Kühe und zur Erhöhung der gemolkenen Milchmenge durch Erhöhung der Genauigkeit der Durchführung der zootechnischen, Veterinär- und Selektionsarbeit auf Grund der Angaben einer genauen Bestimmung der Milchmenge von jeder Kuh und ihres physiologischen Zustandes und durch Reduzierung des Verbrauches von Futtermitteln sowie durch deren bessere Ausnutzung bei, was die Effektivität der Milchproduktion auf Milchfarmen im ganzen steigert.

Kurze Beschreibung der Zeichnungen

Die Erfindung soll durch die nachstehende Beschreibung eines konkreten Ausführungsbeispiels anhand der beiliegenden Zeichnungen näher erläutert werden. Es zeigt:

Fig. I schematisch das Prinzip der Bildung eines Vektors $\overrightarrow{r_i}$ der Korrektur eines Messfehlers im dreidimensionalen metrischen Raum, der im erfindungsgemässen Verfahren zur Bestimmung der Milchmenge berücksichtigt wird, wo im dreidimensionalen Raum in Richtung der Achsen X, Y, Z jeweils die Durchflussmenge Q der Milch, der dem Vorgabewert der Durchflussmenge der Milch zugeordnete Grad $h_g$ der Füllung des Milchzählers und der Messfehler $\sigma^2$ aufgetragen sind;

Fig. 2 das Prinzip einer diskreten Bildung von optimalen Dosen im erfindungsgemässen Verfahren zur Bestimmung der Milchmenge durch Auswahl von entsprechenden Korrekturfaktoren $K_k$ (Ordinatenachse) in Abhängigkeit von der Änderung der Durchflussmenge Q der Milch (Abszissenachse) in kg/min;

Fig. 3 die Gesamtanordnung der zu patentierenden Einrichtung zur Bestimmung der durch eine Melkanlage von einer Kuh gemolkenen Milchmenge für die Durchführung des erfindungsgemässen Verahrens;

Fig. 4 dto. wie in Fig. I, nur aber in einer Vergrösserung;

Fig. 5 das Prinzipschaltbild eines diskreten Milchzählers und einer Recheneinheit der Einrichtung nach Fig. I.

Bevorzugte Ausführungsform der Erfindung

Das erfindungsgemässe Verfahren zur Bestimmung der durch eine Melkanlage von einer Kuh gemolkenen Milchmenge besteht darin, dass man einen kontinuierlichen Milchfluss von einer Kuh erzeugt und aus diesem Milchfluss einzelne Milchdosen bildet.

Die Bildung der einzelnen Milchdosen aus dem kontinuierlichen Milchfluss erfolgt durch Schaffung von der vorgegebenen Durchflussmenge der Milch entsprechenden einzelnen Milchdosen aus diesem Milchfluß, wodurch eine Korrektur in die Bildung der einzelnen Milchdosen eingebracht wird, die einen dynamischen Meßfehler bei der Bildung der einzelnen Milchdosen charakterisiert.

Dann werden aus diesen einzelnen Milchdosen mit Rücksicht auf die Milcheigenschaften und die Höchstempfindlichkeit des Milchzählers der Melkanlage optimale Milchdosen bestimmt, wodurch eine Korrektur in die Bestimmung der optimalen Milchdosen eingebracht wird, die einen statischen Meßfehler bei der Bildung der einzelnen Milchdosen charakterisiert, worauf die optimalen Milchdosen summiert werden und auf solche Weise die von einer Kuh gemolkene Milchmenge bestimmt wird.

In der beschriebenen Ausführungsform des erfindungsgemäßen Verfahrens wird die vorgegebene Durchflußmenge der Milch durch Schaffung einer kontinuierlichen resultierenden Durchflußmenge der Milch kontinuierlichen erzeugt, die zu jedem laufenden Zeitpunkt durch eine Differenz zwischen den Durchflußmengen der Milch am Anfang und Ende bestimmt wird.

Das Wesen des erfindungsgemäßen Verfahrens zur Bestimmung der durch eine Melkanlage von einer Kuh gemolkenen Milchmenge besteht also darin, daß es Operationen zur Bildung der optimalen Milchdosen mit Rücksicht auf die Änderung der Dynamik des Milchflusses durch Schaffung der der vorgegebenen Durchflußmenge der Milch entsprechenden einzelnen Milchdosen aus dem kontinuierlichen Fluß vorsieht, wodurch eine Korrektur in die Bildung der einzelnen Milchdosen eingebracht wird, die einen dynamischen Meßfehler bei der Bildung der Einzeldosen charakterisiert. Die Vorprüfung der Änderung der Bildung der einzelnen Milchdosen bringt gemäß dem zu patentierenden Verfahren Änderungen in die Bildung der optimalen Milchdosen ein, wobei die Bestimmung der optimalen Dosen unter Beachtung ihres dynamischen Meßfehlers, eine ununterbrochene automatische Summierung dieser Dosen im Vorgang der Melkung und eine endgültige Bestimmung der von einer Kuh gemolkenen Milchmenge ermöglicht werden.

Zur Verringerung des zufälligen Meßfehlers im Vorgang der Bildung der Einzeldosen aus dem kontinuierlichen Milchfluß gemäß dem zu patentierenden Verfahren ist es zweckmäßig, nicht Absolutwerte der Durchflußmenge der

Milch, sondern relative Änderungen der Intensität des Flusses zu berücksichtigen, wozu die einzelnen Milchdosen mit Rücksicht auf die Differenz zwischen den Durchflussmengen der Milch am Anfang und Ende gebildet werden.

Der betonte Umstand erhöht die Stabilität des Vorganges der Bildung der Einzeldosen, beseitigt Pulsationen in der Milchströmungsgeschwindigkeit im Vorgang der Melkung, erzeugt ein eigenartiges Trägheitsglied zum Ausgleich von Pulsationen im Milchfluss unabhängig von einer momentanen Änderung der Milchabgabeintensität. Hierbei werden die Zuverlässigkeit und die Stabilität der Bildung der Einzeldosen auch aus technologischen Gründen der Melkung gesteigert, denn gemäss dem zu patentierenden Verfahren wirken auf den Vorgang ihrer Bildung keine Bremsreaktionen des Vorganges einer alveolaren Milchabgabe ein, die beim Melken der Kühe unweigerlich beispielsweise infolge von auftretenden Stress-Situationen, Schmerzempfindungen in den Euterzitzen der Kühe wegen der nichtoptimalen Melktechnologie entstehen.

Darüber hinaus ist es sinnvoll, dass das erfindungsgemässe Verfahren im Vorgang der Melkung eine physiologisch optimale Melktechnologie für die Kühe durch den Melkapparat der Melkanlage sichert, denn er beeinflusst das Vakuumregime der Melkanlage nicht, insbesondere in dem Augenblick des Anschlusses des Melkapparates an das Euter der Kuh sowie im Vorgang einer pulsierenden Milchförderung vom Melkapparat zum Milchzähler. Derartiger positiver Nebeneffekt wird durch Zufuhr des kontinuierlichen Milchflusses von jeder Kuh dem Milchzähler erreicht, bei dem die als Zwischenglied zur Stabilisierung des Milchflusses und Vakuums auftretende Empfangskammer einen bestimmten, recht grossen Rauminhalt aufweist, wodurch die Vakuumpulsationen in diesem Zähler und folglich auch die unter den Euterzitzen der Kuh und in der Melkanlage entsprechenden Vakuumpulsationen ausgeglichen werden, was zur Erhaltung der Gesundheit der Kühe beiträgt und gleichzeitig die Bedingungen für die Bildung der optimalen Milchdosen verbessert (der dynamische Messfehler bei der Messung der Einzeldosen nimmt im Vorgang ihrer Bildung ab).

Es ist kennzeichnend, dass im erfindungsgemässen Verfahren der resultierende Vektor $\vec{r_i}$ (Fig. I) der Kor-

rektur des Messfehlers im Vorgang der Bildung der optimalen Dosen eine sich kontinuierlich ändernde vektoriele Grösse darstellt, die in einem dreidimensionalen metri - schen Raum liegt, der durch Koordinatenebenen gebildet ist, als deren Achsen die Grössen des Messfehlers $\delta$ , der Durchflussmenge Q der Milch und der Grad $g_g$ der Füllung des Milchzählers, der der vorgegebenen Durchflussmenge entspricht, auftreten. Hierbei weist der Vek- tor $\overrightarrow{r_i}$ der Korrektur des Vorganges der Bildung der optimalen Dosen laufende Koordinaten $\overrightarrow{r_i}\left\{\delta_i, Q_i, h_g^i\right\}$ auf und widerspiegelt die internen Zusammenhänge der Parameter $\delta_i = f(Q_i)$, $h_g^i = f(Q_i)$, $\delta_i = f(h_g^i)$.

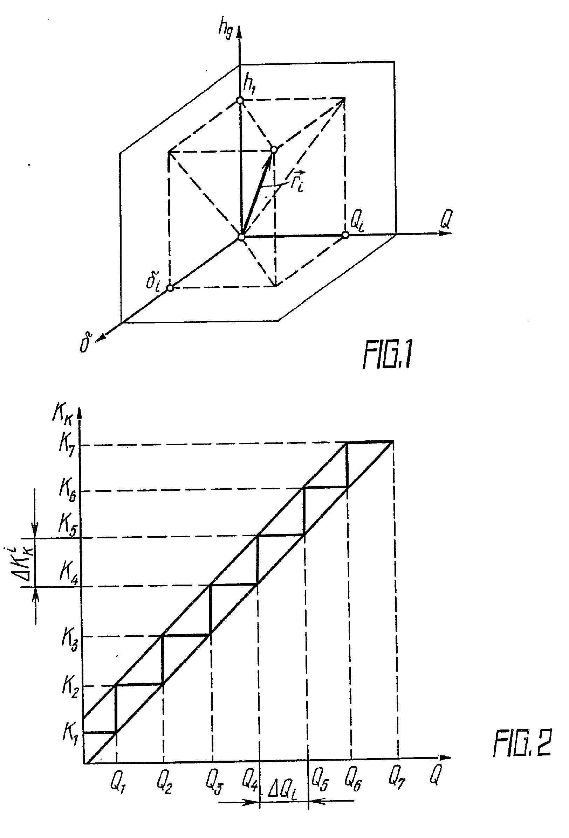

Gemäss dem zu patentierenden Verfahren besteht das Wesen der diskreten Bildung der optimalen Milchdosen durch Auswahl entsprechender Korrekturfaktoren $K_I$, $K_2$,..., $K_7$ (Fig. 2) in folgendem.

Es werden manche vorgegebene diskrete Änderungsin- tervalle $\Delta K_k^i$ für die Korrekturfaktoren gewählt, die manchen vorgegebenen Änderungsintervallen $\Delta Q_i$ für die Durchflussmenge der Milch zugeordnet sind. Der Grösse $Q_i$ der Durchflussmenge der Milch entspricht also bei der Bildung der optimalen Dosis der Korrekturfaktor $K_I$, der Grösse $Q_2$ der Durchflussmenge der Milch der Korrekturfak- tor $K_2$ usw. Die Zahl der gewählten Korrekturfaktoren wird in Abhängigkeit von der erforderlichen Höchstempfindlichkeit des Milchzählers gemäss dem zu patentierenden Verfahren gewählt. Hierbei entspricht dem kleinsten ge- wählten Intervall $\Delta Q_I \left\{Q_I, Q_2,...,Q_7\right\}$ zur Kontrolle der Änderung der Durchflussmenge der Milch das kleinste Intervall $\Delta K_k^i \left\{K_I, K_2,...,K_7\right\}$ der Änderung der Korrektur- faktoren, d.h. die Höchstempfindlichkeit des Milchzählers gegen den dynamischen Messfehler im Vorgang der Bildung der einzelnen Milchdosen.

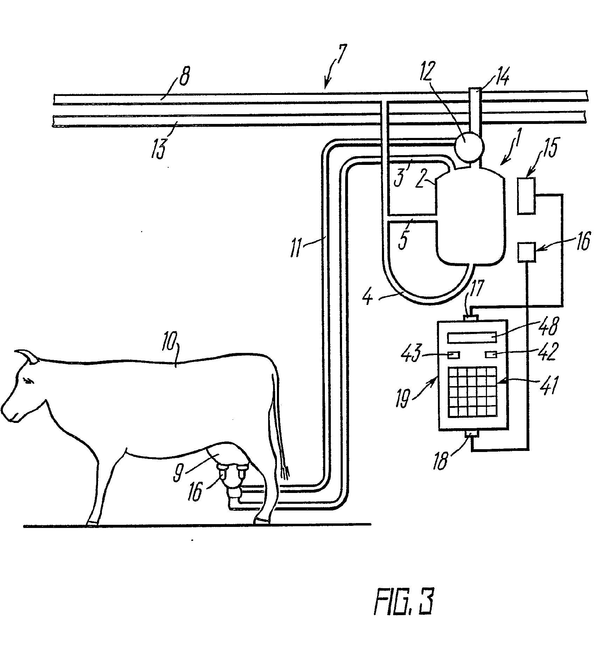

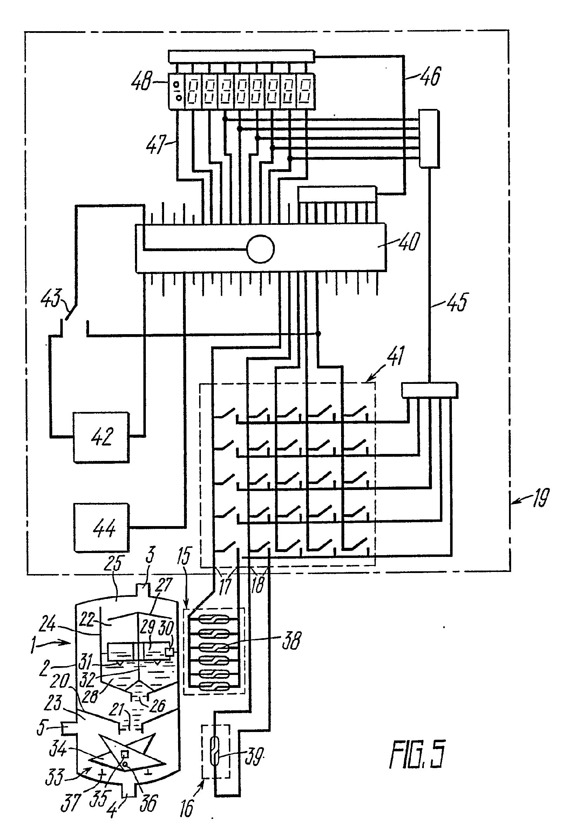

Die erfindungsgemässe Einrichtung zur Bestimmung der durch eine Melkanlage von einer Kuh gemolkenen Milchmenge, die das obengenannte zu patentierende Verfahren durchführt, enthält einen diskreten Zähler I (Fig. 3), dessen Gehäuse 2 einen Eintrittsstutzen 3 und einen Austrittsstutzen 4 für die Zuleitung der Milch zum Zähler I bzw. für deren Ableitung von diesem sowie einen Stutzen 5 für die Ableitung der Luft aus dem Gehäuse 2 des Zählers I aufweist. Der Zähler I kommuniziert mittels des Eintrittsstutzens 3 und des Austrittsstutzens 4 mit einem Melkapparat 6 der Melkanlage 7 bzw. mit deren evakuierter
Milchleitung 8 und mittels des Stutzens 5 mit dem Stutzen 4.

Der Melkapparat 6 wird im Betrieb der Melkung an
das Euter 9 einer Kuh IO angeschlossen und über einen
Schlauch und II einen am Gehäuse 2 des Zählers I befestigten Pulsator I2 mit einer Vakuumleitung I3 der Melkanlage 7 mittels eines Milch-Vakuumhahns I4 verbunden,
der den Zähler I mit der Milchleitung 8 auch im Betrieb
der Melkung verbindet.

Von der Aussenseite des Gehäuses 2 des Milchzählers
I sind nach der Höhe seines Gehäuses 2 ein Geber I5 zur
Auswahl von der vorgegebenen Durchflussmenge der Milch
entsprechenden Milchdosen und ein Geber I6 zur Summierung von optimalen Milchdosen angeordnet, die an die entsprechenden Eingägge I7 und I8 einer Recheneinheit I9
angeschlossen sind.

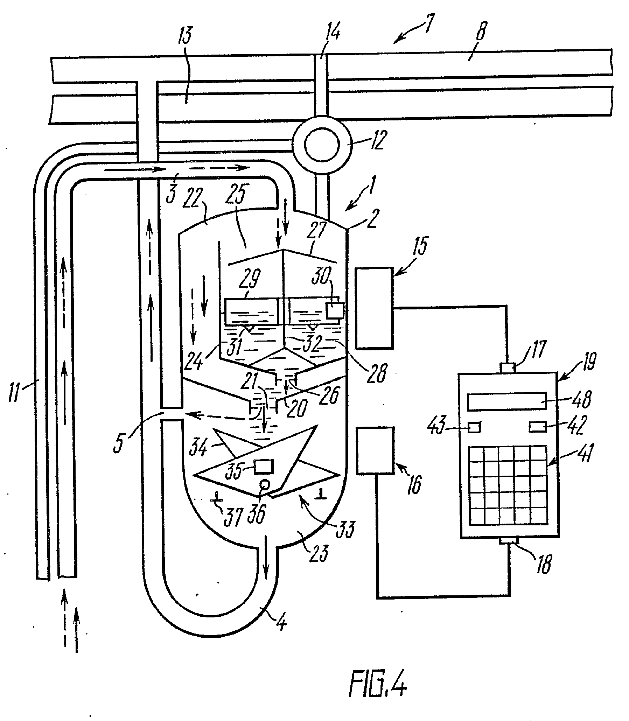

Innerhalb des Gehäuses 2 (Fig. 4) des diskreten Milchzählers I gibt es eine Trennwand 20 mit einer Offnung 2I
zum Milchaustritt, die einen vorgegebenen Querschnitt aufweist. Die Trennwand 20 teilt den Raum des Gehäuses 2
des Milchzählers I in eine seitens des Eintrittsstutzens
3 liegende Empfangskammer 22 und eine seitens des Austrittsstutzens 4 liegende Austrittskammer 23 ein.

Innerhalb der Empfangskammer 22 des Milchzählers I
ist ein Milchdurchflussgeber 24 vom Schwimmertyp untergebracht, der in unmittelbarer Nähe einer der Wände des
Gehäuses 2 liegt, wobei in der beschriebenen Ausführungsform die eine der Wände des Gehäuses 2 mit einer der Wände des Gebers 24 gemeinsam ist.

Der Geber 24 kommuniziert über seinen Eingang 25 mit
dem Eintrittsstutzen 3 und über seine Austrittsöffnung 26,
die einen vorgegebenen Querschnitt aufweist, mit der
Offnung 2I in der Trennwand 20. Der Querschnitt der Austrittsöffnung 26 des Gebers 24 ist kleiner als der Querschnitt der Offnung 2I der Trennwand 20.

Am Eingang 25 des Gebers 24 ist ein Element 27 zur Lenkung des Milchflusses 28 die Wände des Milchdurchflussgebers 24 entlang angeordnet, das die Kegelform besitzt.

Als Fühlelement des Milchdurchflussgebers 24 tritt ein Schwimmer 29 auf, an welchem ein Dauermagnet 30 befestigt ist. Der Magnet 30 ist am Schwimmer 29 seitens der Wand des Gebers 24 befestigt, die mit einer der Wände des Gehäuses 2 des Milchzählers I gemeinsam ist. In unmittelbarer Nähe des Magneten 30 ist von der Aussenseite des Gehäuses 2 des Milchzählers I der Geber I5 zur Auswahl von einzelnen Milchdosen angeordnet, der mit dem Magneten 30 in dem Augenblick der Bestimmung der Einzeldosis der Milch 28 zusammenwirkt.

Seitens der Austrittsöffnung 26 des Gebers 24 weist der Schwimmer 29 Ansätze 3⁻ auf, während der Schwimmer 29 selbst an einer Führung 32 angeordnet ist, was ein vollständiges Schliessen der Öffnung 26 beim Ausbleiben der Milch 28 verhindert.

Innerhalb der Austrittskammer 23 des Milchzählers I liegt ein diskreter Geber 33 von optimalen Milchdosen. Als Fühlelement des Gebers 33 tritt eine Zweikammerrinne 34 auf, auf der ein Dauermagnet 35 angeordnet ist. Die Zweikammerrinne 34 ist drehbar um die Achse 36 bis zu einem Begrenzer 37 angeordnet.

In unmittelbarer Nähe des Magneten 35 liegt von der Aussenseite des Gehäuses 2 des Zählers I der Geber I6 zur Summierung von optimalen Milchdosen, der mit dem Magneten 35 in dem Augenblick der Bestimmung der optimalen Dosis der Milch 28 zusammenwirkt.

In Fig. 4 ist durch gestrichelte Pfeile der Durchlauf der Gas-Luft-Komponente der Milch in der Einrichtung gemäss der Erfindung und durch ausgezogene Pfeile der der Milch angedeutet.

In der beschriebenen Ausführungsform der zu patentierenden Einrichtung ist der Geber I5 (Fig. 5) zur Auswahl von der vorgegebenen Durchflussmenge der Milch 28 entsprechenden einzelnen Milchdosen in Form einer Gruppe von zueinander parallelgeschalteten Zungenrelais 38 ausgeführt, die an den Eingang I7 der Recheneinheit I9 angeschlossen und in einem vorgegebenen Abstand voneinander

EP 0 372 089 A1

nach der Höhe des Gehäuses 2 des Zählers I, der der Grösse der Änderung der Intensität des Flusses der Milch 28 im Milchdurchflussgeber 24 entspricht, angeordnet sind.

Der Geber I6 zur Summierung von optimalen Milchdosen ist in Form eines Zungenrelais 39 ausgeführt, das an den Eingang I8 der Recheneinheit I9 gelegt ist.

In der beschriebenen Ausführungsform der Einrichtung nach der Erfindung kann die Recheneinheit I9 in einem beliebigen, den auf diesem Gebiet bewanderten Fachleuten weit bekannten Verfahren, das für diese Zwecke und Aufgaben passt, ausgeführt sein.

So enthält die Recheneinheit I9 (Fig. 5) einen Mikroprozessor 40, an dessen zugeordnete Eingänge über ein Steuerpult 4I die Zungenrelais 38 des Gebers I5 zur Auswahl von einzelnen Milchdosen bzw. das Zungenrelais 39 des Gebers I6 zur Summierung von optimalen Milchdosen geschaltet sind.

Als Mikroprozessor 40 kann ein beliebiger, den gestellten Aufgaben und Zielen gewachsener Mikroprozessor benutzt werden, der den auf diesem Gebiet bewanderten Fachleuten weit bekannt ist, wie er in einem Handbuch von C.T.Khvosc e.a. "Mikroprotsessory i mikroEVM v sistemakh avtomaticheskogo upravlenia" (Mikroprozessoren und Mikrorechner in Systemen der automatischen Steuerung), 1987, Verlag "Mashinostroenie" (Leningrad), S. 8 oder in einem von L.N.Presnukhin herausgegebenen Buch I "Arkhitektura i proektirovanie mikroEVM. Organizatsia vychislitelnykh prozessov" (Architektur und Entwerfen von Mikrorechnern. Organisation von Rechenvorgängen), I987, Verlag "Vysheishaya shkola" (Minsk), S. 46 und I3I, beschrieben ist.

An den Mikroprozessor 40 sind ein Umschalter 42 für Befehlsregister des Mikroprozessors 40, ein Betriebsartenschalter 43 des Mikroprozessors 40 und ein Taktgenerator 44 angeschlossen. Das Steuerpult 4I und der Mikroprozessor 40 sind mittels Verbindungsleitungen 45, 46 und 47 jeweils mit einem Digitalanzeiger 48 elektrisch verbunden.

Die Arbeitsweise der zu patentierenden Einrichtung zur Bestimmung der durch eine Melkanlage von einer Kuh gemolkenen Milchmenge, die das erfindungsgemässe Verfah-

ren realisiert, besteht in folgendem.

Gemäss den Betriebsvorschriften wird ein Nenn-Vakuum-regime der Arbeit der Melkanlage 7 (Fig. 3) eingestellt, worauf der Melkapparat 6 an das Euter 9 der Kuh IO ange-schlossen wird. Es beginnt der Vorgang der Melkung der Kuh IO, der durch Evakuieren der Vakuumleitung I3 der Melkanlage 7, des Pulsators I2, des Schlauches II und des Melkapparates 6 ermöglicht wird.

Im Anfangsstadium der Melkung strömt die Milch in zunehmendem Fluss entsprechend der Realisierung des her-kömmlichen, zu den Besonderheiten jeder Kuh adäquaten Reflexes der Milchabgabe über den Eintrittsstutzen 3 (Fig. 4) aus dem Melkapparat 6 in die Empfangskammer 22 des diskreten Milchzählers I ein. Die Portionen der Milch 28 erreichen ferner im pulsierenden Fluss das Element 27 zur Lenkung des Flusses der Milch 28 die Wände des Milch-durchflussgebers 24 entlang und sammeln sich im unteren Teil des Gebers 24 mit zunehmender Milchabgabegeschwin-digkeit bei der Kuh IO (Fig. 3) beim Melken über den Sollwert von z.B. 200 g/min hinaus an, wozu eine vorhin festgelegte Grösse des Querschnitts der Austrittsöffnung 26 (Fig. 4) des Milchdurchflussgebers 24 dient.

Hierbei wird das Vakuum unter den Zitzen des Euters 9 (Fig. 3) der Kuh IO dank einem recht grossen Rauminhalt der Empfangskammer 22 des Gehäuses 2 des Milchzählers I stabilisiert, dessen Pulsationen auch bei einem zufälligen Abfall eines der vier Melkbecher des Melkapparates 6 von der Zitze infolge der An- oder Abschaltung der in der Melkanlage 7 ausser dem betrachteten Melkapparat 6 zugegleich arbeitenden Melkapparate möglich sind, denn meist werden mehrere parallel arbeitende Melkapparate, beispielsweise vier bis fünf Apparate zugleich, benutzt. Die für die Gesundheit der Kühe ungünstigen Pulsationen des Vakuums unter den Zitzen der Kühe können auch aus anderen, beispielsweise technologischen Gründen im Zusammenhang mit der Entstehung eines Luftsoges durch die Undichtigkeiten in der Milchleitung 8 oder in der Vakuumleitung I3 der Melkanlage 7 u.ä. eintreten.

Indem sich die Milch 28 im Durchflussgeber 24 (Fig. 4) ansammelt, hebt sie mit zunehmender Insinsität des Flusses den Schwimmer 29 mit dem Magneten 30 auf der Führung 32 hoch, und der Magnet 30 kommt im Ergebnis in eine unmittelbare Nähe eines entsprechenden Zungenrelais 38 (Fig. 5) des Gebers I5 zur Auswahl von der vorgegebenen Durchflussmenge der Milch im Geber 24 entsprechenden einzelnen Milchdosen - ihm gegenüber - zu liegen. Das Magnetfeld des Dauermagneten 30 wirkt mit dem entsprechenden Zungenrelais 38 zusammen, und demensprechend schliesst der entsprechende Steuerkreis des Mikroprozessors 40 der Recheneinheit I9 über die zugeordneten Kontakte des Steuerpultes 4I in sich ein. Auf dem Digitalanzeiger 48 erscheint ein digitaler Wert der Menge einer einzelnen Milchdosis des Zählers I, der den jeweiligen Wert der Milchabgabeintensität bei der Kuh zum laufenden Zeitpunkt durch Einführung eines der möglichen, der Grösse der Milchabgabeintensität zugeordneten Faktoren $K_I$, $K_2$,...,$K_7$ der dynamischen Korrektur des Messfehlers in die Einheit I9 berücksichtigt, die einer Reihe diskreter Grössen $Q_I$, $Q_2$,...,$Q_7$ der Milchdurchflussmenge entsprechenden, die durch den Geber 24, wie in Fig. 2 gezeigt, gewählt werden.

Es ist kennzeichnend, dass der Milchdurchflussgeber 24 die diskreten Pegelwerte $Q_I$, $Q_2$,...,$Q_7$ der Durchflussmengen der Milch nicht nach deren Absolutwert, sondern nach der Differenz der Durchflussmengen der Milch am Eingang 25 (Fig. 5) des Gebers 24 und an seiner Austrittsöffnung 26 wählt.

Im weiteren fliesst die Milch von einer Kuh IO (Fig. 3) aus dem Durchflussgeber 24 (Fig. 4) durch die Austrittsöffnung 26 aus, während die Gas-Luft-Komponente der Milch vom Hauptfluss der Milch 28 in Umgebung des Durchflussgebers 24 längs der Wand des Gehäuses 2 der Empfangskammer 22 des Zählers I abgetrennt wird, und die Milch strömt in die Austrittskammer 23 durch die Öffnung 2I der Trennwand 20 ein und fliesst in den Geber 33 von optimalen Milchdosen ab. Die Gas-Luft-Komponente der Milch wird hierbei über den Stutzen 5 abgeleitet, der mit dem Austrittsstutzen 4 kommuniziert.

Indem also die von der Gas-Luft-Komponente abgetrennte Milch 28 aus der Öffnung 2I der Trennwand 20 ausfliesst, erreicht sie den Geber 33 von optimalen Milchdosen. Da das Fühlelement des Gebers 33 (Fig. 5) in Form der Zweikammerrinne 34 mit dem Magneten 35 ausgeführt ist, so dreht sich die Rinne 34 bei Erreichen einer bestimmten optimalen Dosis der Milch 28 um ihre Achse 36 um, das Magnetfeld des Dauermagneten 35 tritt in Wechselwirkung mit dem Zungenrelais 39 des Gebers I6 zur Summierung von optimalen Milchdosen, und der entsprechende Steuerkreis des Mikroprozessors 40 der Recheneinheit I9 schliesst sich über die zugeordneten Kontakte des Steuerpultes 4I.

Im Ergebnis einer aufeinanderfolgenden Auslösung der Geber 24 und I5, 33 und I6 wird auf den Digitalanzeiger 48 der Recheneinheit I9 ein Signal zur Summation der digitalen Grösse der einzelnen Milchdosis gegeben, die durch den Geber I5 in Übereinstimmung mit der jeweiligen diskreten Grösse der Durchflussmenge der Milch (mit der Milchabgabeintensität, wie in Fig. 2 gezeigt) gewählt ist.

Hierbei erfolgt die Summation dieser einzelnen Milchdosen im Vorgang der Melkung der Kuh unter Berücksichtigung der statischen und dynamischen Korrektur des Messfehlers der Anzeigen des Milchzählers I (Fig. 5) auf Befehle des Gebers I5 zur Auswahl von einzelnen Milchdosen vom Durchflussgeber 24.

Auf solche Weise gelangen in den Digitalanzeiger 48 der Recheneinheit I9 auf Befehle des Gebers I5 Signale der dynamischen Korrektur $K_I$, $K_2$,...,$K_7$ (Fig. 2) des Milchzählers I, die dem vorgegebenen Milchstand im Durchflussgeber 24 und also auch der Lage eines der Zungenrelais 38 des Gebers I5 zur Auswahl von einzelnen Milchdosen entsprechen. Hierbei ist jedem Zungenrelais 38 sein eigener Faktor der dynamischen Korrektur des Messfehlers des Zählers I $K_I$, $K_2$,...,$K_7$ (Fig. 2) im entsprechenden Punkt $Q_I$, $Q_2$,...,$Q_7$ der Durchflussmenge der Milch zugeordnet, der vorher in den Speicher der Recheneinheit I9 (Fig. 5) eingegeben worden ist.

Der Milchzähler I zählt also die einzelnen Milchdosen, die mit Rücksicht auf die Besonderheiten seines Betriebes und seiner Konstruktion, die Milcheigenschaften und die Dynamik der Milchabgabe der Milchdosis korrigiert sind, während der Digitalanzeiger 48 die laufende digitale Grösse der durch die Melkanlage 7 von einer Kuh gemolkenen Milchmenge genau registriert. Der Abfluss der gemessenen Milchdosen aus dem Gehäuse 2 (Fig. 1) des Zählers I über dessen Austrittskammer 23 in die Milchleitung 8 erfolgt durch den Austrittsstutzen 4.

Merkwürdig ist, dass sich die zeitweilige Hemmung des Reflexes der Milchabgabe bei einer einzelnen Kuh, die durch den Gesundheitszustand der Kuh, die Güte der Melktechnologie oder die Entstehung einer Stress-Situation hervorgerufen ist, auf die Arbeit der zu patentierenden Einrichtung nicht auswirkt, denn sie ist mit solch einer Form und Konstruktion des Milchdurchflussgebers 24 versehen, bei der der Geber 24 ein eigenartiges Trägheitsglied darstellt, das mit einer Verzögerung anspricht. Dazu trägt die für eine bestimmte vorhin festgelegte Grösse der Durchflussmenge der Milch, beispielsweise von 200 g/min, kalibrierte Ausführung der Austrittsöffnung 26 des Gebers 24 bei, was es nicht gestattet, dass bei einer zeitweiligen Unterbrechung der Milchabgabe oder im Falle eines erneuten Milchzulaufes die gesamte Menge der Milch 28 aus dem Durchflussgeber 24 ausfliesst.

Derartige Realisierung des zu patentierenden Verfahrens zur Bestimmung der Milchmenge und der erfindungsgemässen Einrichtung für dessen Durchführung nimmt eine Korrektur des Messfehlers bei der Bestimmung der Milchmenge von einer Kuh in Abhängigkeit von der Änderung der Grösse der Durchflussmenge vor, sorgt für eine Invarianz bei Einwirken destabilisierender Faktoren des Milchflusses und zieht den Einfluss des statischen und dynamischen Messfehlers bei der Bildung der durch die äusseren und inneren Gründe (Betriebsbedingungen und Besonderheiten der Konstruktion des Milchzählers sowie die Eigenschaften des zu messenden Mediums) bedingten optimalen Milchdosen in Betracht, wodurch die Genauigkeit der Messung der durch die Melkanlage von einer Kuh gemolkenen Milchmenge erhöht wird.

Die zu patentierende Einrichtung zur Bestimmung der durch eine Melkanlage von einer Kuh gemolkenen Milchmenge für die Durchführung des erfindungsgemässen Verfahrens sichert also eine beträchtliche Erhöhung der Messgenauigkeit, trägt zur Erhaltung der Gesundheit der Kühe und Steigerung der Leistung der Herde durch eine individuelle Pflege der Kühe unter Benutzung von Programmen der zootechnischen, Selektions- und Veterinärkontrolle der Tiere anhand der genauen Angaben der Leistungsbewertung jeder Kuh im einzelnen bei.

Die zu patentierende Einrichtung für die Durchführung des erfindungsgemässen Verfahrens gehört zu einer aussichtsreichen neuen Klasse von "intelligenten" Messern der Milcherträge, wird in ein Steuerrechensystem für eine Milchfarm leicht eingebaut und kann bei einem beliebigen bekannten Typ der Melkanlagen einfach realisiert werden. Die Anwendung der Einrichtung erhöht im ganzen die Produktionseffektivität auf den Milchfarmen durch eine optimale Auswertung der genauen Angaben über die Milcherträge bei jedem einzelnen Tier in den Zielprogrammen der zootechnischen, Selektions- und Veterinärkontrolle unter Benutzung der Rechentechnik und bei einer vollständigeren Ausnutzung des genetischen Potentials jedes Tieres hinsichtlich der Leistung.

Industrielle Anwendbarkeit

Die Erfindung kann auf beliebigen bekannten Melkanlagen mit der Milchsammlung von einer Kuh und der Bestimmung der Milchmenge im Vorgang der Melkung angewendet werden.

PATENTANSPRÜCHE:

I. Verfahren zur Bestimmung der durch eine Melkanlage von einer Kuh gemolkenen Milchmenge, darin bestehend dass man einen kontinuierlichen Milchfluss von einer Kuh erzeugt, aus diesem Fluss einzelne Milchdosen bildet, dann aus diesen einzelnen Milchdosen optimale Milchdosen unter Beachtung der Milcheigenschaften und der Höchstempfindlichkeit eines Milchzählers der Melkanlage bestimmt, wodurch eine Korrektur in die Bestimmung der optimalen Milchdosen eingebracht wird, die einen statischen Fehler bei der Bildung der einzelnen Milchdosen charakterisiert, und im weiteren die optimalen Milchdosen summiert, dadurch g e k e n n z e i c h n e t, dass die einzelnen Milchdosen aus dem kontinuierlichen Milchfluss durch Erzeugung der der vorgegebenen Durchflussmenge der Milch entsprechenden einzelnen Milchdosen aus diesem Milchfluss gebildet werden, wodurch eine Korrektur in die Bildung der einzelnen Milchdosen eingebracht wird, die einen dynamischen Messfehler bei der Bildung der einzelnen Milchdosen charakterisiert.

2. Verfahren zur Bestimmung der Milchmenge nach Anspruch I, dadurch g e k e n n z e i c h n e t, dass die vorgegebene Durchflussmenge der Milch kontinuierlich durch Erzeugung einer kontinuierlichen resultierenden Durchflussmenge der Milch gebildet wird, die zu jedem laufenden Zeitpunkt durch eine Differenz zwischen den Durchflussmengen der Milch am Anfang und Ende bestimmt wird.

3. Einrichtung zur Bestimmung der durch eine Melkanlage von einer Kuh gemolkenen Milchmenge, die einen diskreten Milchzähler (I), der mittels eines Eintrittsstutzens (3) und eines Austrittsstutzens (4) mit einem Melkapparat (6) der Melkanlage (7) bzw. mit deren Milchleitung (8) kommuniziert und in dessen Gehäuse (2) ein Geber (33) von optimalen Milchdosen untergebracht ist, an dessen Fühlelement ein Magnet (35) befestigt ist, der in dem Augenblick der Bestimmung der optimalen Dosis der Milch (28) mit einem Geber (I6) zur Summierung von optimalen Milchdosen zusammenwirkt, der in unmittelbarer Nähe des Magneten (35) des Fühlelements des Gebers (33) von der Aussenseite des Gehäuses (2) des Milchzählers (I) angeordnet und an einen

entsprechenden Eingang (18) einer Recheneinheit (19) angeschlossen ist, dadurch g e k e n n z e i c h n e t, dass in dieser innerhalb des Gehäuses (2) des diskreten Milchzählers (1) eine Trennwand (20) mit einer einen vorgegebenen Querschnitt aufweisenden Öffnung (21) zum Milchaustritt, die den Raum des Gehäuses (2) des Milchzählers (1) in eine seitens des Eintrittsstutzens (3) liegende Empfangskammer (22) und eine seitens des Austrittsstutzens (4) liegende Austrittskammer (23) trennt, in der der Geber (33) von optimalen Milchdosen angeordnet ist, und ein innerhalb der Empfangskammer (22) des Milchzählers (1) in unmittelbarer Nähe einer der Gehäusewände (2) des Milchzählers (1) angeordneter Milchdurchflussgeber (24) der über seinen Eingang (25) mit dem Eintrittsstutzen (3) des Milchzählers (1) und über seine einen vorgegebenen Querschnitt aufweisende Austrittsöffnung (26) mit der Öffnung (21) in der Trennwand (20) kommuniziert und als Fühlelement einen Schwimmer (29) mit einem Magneten (30) aufweist, der am Schwimmer (29) seitens der Gehäusewand (2) des Milchzählers (1) befestigt ist, in deren unmittelbarer Nähe der Milchdurchflussgeber (24) liegt, wobei der Querschnitt der Austrittsöffnung (26) des Milchdurchflussgebers (24) kleiner als der Querschnitt der Öffnung (21) in der Trennwand (20) ist, sowie ein Geber (15) zur Auswahl von der vorgegebenen Durchflussmenge der Milch (28) entsprechenden einzelnen Milchdosen, der in unmittelbarer Nähe des Magneten (30) des Fühlelements des Milchdurchflussgebers (24) von der Aussenseite des Gehäuses (2) des Milchzählers (1) angeordnet ist, mit dem Magneten (30) des Fühlelements des Gebers (24) in dem Augenblick der Bestimmung der einzelnen Milchdosen in Wechselwirkung tritt und an einen entsprechenden Eingang (17) der Recheneinheit (19) gelegt ist, vorgesehen sind.

4. Einrichtung zur Bestimmung der Durchflussmenge der Milch nach Anspruch 3, dadurch g e k e n n z e i c h - n e t, dass in dieser ein Element (27) zur Lenkung des Flusses der Milch (28) die Wände des Milchdurchflussgebers (24) entlang verfügbar ist, das am Eingang (25) des Milchdurchflussgebers (24) angeordnet ist.

5. Einrichtung zur Bestimmung der Durchflussmenge der Milch nach Anspruch 3 oder 4, dadurch g e k e n n -

z e i c h n e t, dass der Geber (I5) zur Auswahl von der vorgegebenen Durchflussmenge der Milch (28) entsprechenden einzelnen Milchdosen in Form einer Gruppe von zueinander parallelgeschalteten Zungenrelais (3E), die in einem vorgegebenen Abstand voneinander angeordnet sind, der der Grösse der Änderung der Intensität des Flusses der Milch (28) im Milchdurchflussgeber (24) entspricht, ausgeführt ist.

FIG.1

FIG.2

FIG. 3

FIG. 5

FIG.4

# INTERNATIONAL SEARCH REPORT

International Application No PCT/SU 89/00094

| I. CLASSIFICATION OF SUBJECT MATTER (if several classification symbols apply, indicate all) [6] |
|---|
| According to International Patent Classification (IPC) or to both National Classification and IPC |
| IPC[4]     A 01 J 7/00 |

## II. FIELDS SEARCHED

| Minimum Documentation Searched [7] | |
|---|---|
| Classification System | Classification Symbols |
| IPC[4] | A 01 J 7/00 |

| Documentation Searched other than Minimum Documentation to the Extent that such Documents are included in the Fields Searched [8] |
|---|
| |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | SU, A1, 1175403 (Latviiskaya selskokhozyaistvennaya akademia) 30 August 1985 (30.08.85), see the claims, figures 1-4 | 1-5 |
| A | SU, A1, 1250225 (Kubansky selskokhozyaistvenny institut) 15 August 1986 (15.08.86) see the claims, figures 1-3 | 1-5 |
| A | WO, A1, 82/03963 (LEMMER, HELMUT), 25 November 1982 (25.11.82), see the claims, figures 1-3 <br> & EP, A1, 78819, 18.05.83 <br> DE, A1, 3118865, 02.12.82 | 1-5 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 4 July 1989 (04.07.89) | 15 August 1989 (15.08.89) |
| International Searching Authority <br> ISA/SU | Signature of Authorized Officer |

Form PCT/ISA/210 (second sheet) (January 1985)